# EUROPÄISCHE PATENTSCHRIFT

(11) **EP 3 102 445 B1**
(45) Veröffentlichungstag und Bekanntmachung des Hinweises auf die Patenterteilung: **25.10.2017**
(21) Anmeldenummer: 15702462.1
(22) Anmeldetag: 02.02.2015
(51) Int. Cl.: B60G 15/12, B60G 17/048, B60G 17/052, F16F 9/05, F16F 9/512, F16F 9/342

(54) **LUFTFEDERANORDNUNG MIT INTEGRIERTEM STEUERVENTIL UND WIPPENFÖRMIGEM BETÄTIGUNGSMITTEL**
AIR SPRING ASSEMBLY HAVING AN INTEGRATED CONTROL VALVE AND A SEESAW-SHAPED ACTUATING ELEMENT
ENSEMBLE DE SUSPENSION PNEUMATIQUE COMPRENANT UNE SOUPAPE DE COMMANDE INTÉGRÉE ET UN MOYEN D'ACTIONNEMENT EN FORME DE BASCULE

(30) Priorität: 03.02.2014 DE 102014101279
(43) Veröffentlichungstag der Anmeldung: 14.12.2016
(73) Patentinhaber: KNORR-BREMSE Systeme für Nutzfahrzeuge GmbH, 80809 München (DE)
(72) Erfinder: DALI, István, H-6000 Kecskemét (HU); KANTOR, Kornél, H-6000 Kecskemét (HU); KONCZ, László, H-6000 Kecskemét (HU); VASS, Zoltan, H-6000 Kecskemet (HU)
(86) Internationale Anmeldenummer: PCT/EP2015/052059
(87) Internationale Veröffentlichungsnummer: WO 2015/114134

(56) Entgegenhaltungen:
- EP-A1- 1 870 268
- EP-A2- 1 327 538
- EP-A2- 2 131 059
- EP-A2- 2 581 625
- DE-A1- 10 003 045
- DE-A1-102010 012 346
- DE-A1-102010 026 236
- DE-A1-102011 108 249
- DE-B3-102009 046 290
- US-A- 2 916 298
- US-A- 2 978 256

## Beschreibung

### Gebiet der Erfindung

Die Erfindung betrifft eine Luftfederanordnung mit einer integrierten Steuerventilanordnung zur Druckluftbeaufschlagung einer zwischen einem Außenrohr, einem Abrollrohr und einem diese Bauteile verbindenden Luftfederbalg gebildeten Federdruckkammer, wobei die Steuerventilanordnung aus einem einzelnen Belüftungsventil und einem einzelnen Entlüftungsventil besteht, die durch ebenfalls integrierte mechanische Betätigungsmittel nach Maßgabe der Luftfederhubstellung zum Be- oder Entlüften der Federdruckkammer betätigbar sind.

Das Einsatzgebiet der Erfindung erstreckt sich vornehmlich auf die Fahrzeugtechnik. Im Bereich des Fahrwerks von Nutzfahrzeugen kommen beispielsweise Schwingungsdämpfer zum Einsatz, die ein meist hydraulisches Dämpfungselement und eine hiermit zusammenwirkende Luftfederanordnung umfassen. Im Sinne einer integrierten Bauweise weist das Dämpfungselement üblicherweise ein Behälterrohr auf, welches mit einem Abrollrohr der Luftfeder verbunden ist, wobei das Abrollrohr über einen als Rollbalg wirkenden Luftfederbalg mit einem konzentrisch und relativ zum Abrollrohr axial beweglich angeordneten Außenrohr verbunden ist. Der Luftfederbalg, das Abrollrohr sowie das Außenrohr begrenzen eine unter Luftdruck zur Federung stehende Federdruckkammer.

Mit derartigen Schwingungsdämpfern ist beispielsweise die Aufhängung eines Fahrerhauses auf einem Fahrwerk eines Nutzfahrzeuges ausgestattet, um die von der Straße über die Radaufhängung in das Fahrwerk eingeleiteten Schwingungen vom Fahrerhaus weitgehend fern zu halten.

### Hintergrund der Erfindung

Aus der DE 10 2010 012 346 A1 geht eine Luftfederanordnung für ein Nutzfahrzeug hervor, bei welcher innenliegend eine Steuerventilanordnung vorgesehen ist, um Druckluft bezüglich der Federdruckkammer zu- oder abzuführen. Über ebenfalls innerhalb der Federdruckkammer angeordnete mechanische Betätigungsmittel ist die Steuerventilanordnung je nach Höhenniveau ansteuerbar. Gewöhnlich wird der Federdruckkammer Druckluft zugeführt, wenn die Luftfeder auf Mindesthöhenniveau abfällt, um die Federungseigenschaften wieder herzustellen. Eine Entlüftung der Federdruckkammer erfolgt dagegen dann, wenn das Höhenniveau der Federanordnung reduziert werden soll.

Zu diesem Zweck besteht die Steuerventilanordnung bei diesem Stand der Technik gemäß einer der Ausführungsformen aus zwei Einzelventilen zum jeweils Be- und Entlüften der Federdruckkammer. Beide Einzelventile sind seitens des Abrollrohrs angeordnet und werden über ein federvorgespanntes mechanisches Betätigungsmittel, dass seitens des Außenrohres angebracht ist, betätigt. Das federvorgespannte mechanische Betätigungsmittel wirkt dabei entgegen einem ebenfalls federvorgespannten Betätigungsstößel der beiden Einzelventile. Je nach Federstärke und Grad der Federermüdung kann sich durch diese technische Lösung ein unbestimmter Schaltpunkt für die Ventilbetätigung ergeben. Insbesondere weil die Betätigungsstößel bei diesem Stand der Technik von unterschiedlicher Länge sind und gleichsinnig betätigt werden, kann es zu unerwünschten Überlagerungen von Schaltzuständen kommen.

Die EP 1 327 538 A2 offenbart eine Luftfederanordnung mit ebenfalls integrierter Steuerventilanordnung zur Be- oder Entlüftung der Federdruckkammer. Die Betätigung der Steuerventilanordnung erfolgt hier über ein ebenfalls innerhalb der Luftfeder angeordnetes Steuerelement, das an einem der beiden relativ zueinander beweglichen Luftfederbaugruppen Abrollrohr oder Außenrohr angreift. Das Steuerelement weist eine Wirklänge auf, welche kürzer ist als die Hublänge der Luftfeder und von einer Feder gegen eine der zueinander beweglichen Luftfederbaugruppen vorgespannt ist. Darüber hinaus ist das Steuerelement relativ zu beiden Luftfederbaugruppen schwimmend gelagert, in dem eine zweite Feder, deren Kraftrichtung entgegen der vorgenannten ersten Feder wirksam ist, die Stellung des Steuerelements mitbestimmt. Durch die schwimmende Lagerung können sich ebenfalls über die Lebensdauer hinweg undefinierte Schaltzustände einstellen. Dies bedeutet, dass eine Be- oder Entlüftung der Federdruckkammer nicht wie gewünscht bei einer definierten Hubstellung der Luftfederanordnung zuverlässig ausgelöst wird.

Die DE 100 03 054 A1 offenbart eine andere Luftfederanordnung mit integrierter Steuerventilanordnung sowie mechanische Betätigungsmittel zur Betätigung der Steuerventilanordnung. Das Betätigungsmittel weist eine Führungsbahn auf und greift an einem der beiden relativ zueinander beweglichen Luftfederbaugruppen an. Zusammenwirkend hiermit ist die Steuerventilanordnung als Drehschieberventil ausgebildet, wobei die Führungsbahn der Betätigungsmittel kürzer ausgeführt ist als die Hublänge der Luftfeder und die Betätigungsmittel in lösbarer Wirkverbindung mit der diese tragende Luftfederbaugruppe steht. Zwar ist durch diesen Mechanismus eine korrektere Ventilbetätigung erzielbar, allerdings erfolgt eine Ventilbetätigung nicht über den gesamten Luftfederhubweg, so dass es zumindest in extremen Endlagenpositionen zu undefinierten Schaltstellungen kommen kann.

Es ist daher die Aufgabe der vorliegenden Erfindung eine Luftfederanordnung mit einer integrierten Steuerventilanordnung der gattungsgemäßen Art dahingehend weiter zu verbessern, dass über die gesamte Lebenszeit eine zuverlässige Be- und Entlüftung der Federdruckkammer in allen Hubstellung sichergestellt wird.

Die Aufgabe wird ausgehend von einer Luftfederanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das Belüftungsventil der Steuerventilanordnung gegenüberliegend dem Entlüftungsventil mit einander zugewandten Betätigungsstößeln angeordnet ist, wobei die dazwischenliegend hierauf einwirkenden mechanischen Betätigungsmittel einen Schaltwipphebel umfassen, der mit dem einen Ende in mindestens einer Führungsbahn eines am Abrollrohr bzw. Außenrohr angebrachten Betätigungselements eingreift, um mit dem anderen Ende auf die Betätigungsstößel zum Schalten der Steuerventilanordnung einzuwirken.

Der Vorteil der erfindungsgemäßen Lösung liegt insbesondere darin, dass durch die federlose Ankopplung der mechanischen Betätigungsmittel an die Steuerventilanordnung diesbezügliche Fertigungstoleranzen und Ermüdungserscheinungen keinen Einfluss auf die Schaltzustände der Steuerventilanordnung haben. Über den gesamten Luftfederhubweg ist die Schaltstellung des Belüftungsventils und des Entlüftungsventils und insbesondere die relative Schaltstellung zueinander stets definiert, so dass es insbesondere auch nicht zu Überströmverlusten während eines Schaltstellungswechsels kommen kann. Die erfindungsgemäße Lösung bildet durch die sich vorzugsweise über den gesamten Luftfederhubweg erstreckende Führungsbahn für den Schaltwipphebel eine Art Zwangsführung der Ventilbetätigung, welche mit einem geringen bauteiltechnischen Aufwand erreicht wird.

Im Hinblick auf eine kompakte Lösung wird vorgeschlagen, dass die Betätigungsstößel von Belüftungsventil und Entlüftungsventil koaxial zueinander angeordnet sind, um die Ventilanordnung im Bereich des Abrollrohres bauraumsparend zu integrieren.

Vorzugsweise sind sowohl das Belüftungsventil als auch das Entlüftungsventil als federrückgestellte monostabile 2/2-Wege-Schiebventile ausgebildet. Zur Belüftung wird ein Speisedruckanschluss P des Belüftungsventils mit einem Arbeitsleitungsanschluss A verbunden, welcher die Druckluft zur Federdruckkammer weiterleitet. In der Sperrstellung ist diese Verbindung unterbrochen. Beim Entlüftungsventil wird zur Entlüftung einer Verbindung eines Arbeitsleitungsanschlusses A, der mit der Federdruckkammer in Verbindung steht, mit einem Entlüftungsanschluss R, welcher zur Atmosphäre führt, hergestellt. Die Sperrstellung unterbindet diese Verbindung. Die mechanischen Betätigungsmittel zur Ansteuerung der so ausgebildeten Steuerventilanordnung sind so gestaltet, dass nur entweder das Belüftungsventil oder das Entlüftungsventil betätigbar ist, so dass Überschneidungen in den Schaltzuständen nicht stattfinden können.

Gemäß einer bevorzugten Ausführungsform der Erfindung ist das mindestens eine Führungsbahn aufweisende Betätigungselement für den Schaltwipphebel seitens eines distalen Endes über eine Gelenkanordnung am Außenrohr angebracht. Durch die Gelenkanordnung werden nicht-axiale Relativbewegungen zwischen Außenrohr und Abrollrohr ausgeglichen, so dass es nicht zu einem Verklemmen von relativ zueinander beweglichen Bauteilen kommen kann. Im Rahmen der Erfindung ist es auch möglich, dass das Betätigungselement seitens des Abrollrohrs angeordnet ist, so dass die Steuerventilanordnung seitens des Außenrohrs platziert wird.

Vorzugsweise ist das Betätigungselement hülsenförmig ausgebildet und weist zwei aneinander an der äußeren Mantelfläche gegenüberliegend angeordnete Führungsbahnen auf. Dies bietet die Voraussetzung dafür, dass der Schaltwipphebel an dem dem Betätigungselement zugewandeten Ende gabelförmig ausgebildet ist und in die einander gegenüberliegenden Führungsbahnen formschlüssig zum Eingriff kommt. Hierdurch wird eine präzise arbeitende Betätigungsmechanik für die Steuerventilanordnung erzielt. Das hülsenförmige Betätigungselement lässt sich darüber hinaus bauraumsparend innerhalb der Luftfederanordnung integrieren.

Zusätzlich kann das Betätigungselement in dem Abrollrohr gegen Verdrehung um die Längsachse der Luftfederungsanordnung gesichert geführt sein.

Gemäß einer bevorzugten Ausführungsform der Erfindung umfasst die Führungsbahn einen dem Belüftungsventil zugeordneten oberen Bahnabschnitt, welcher zum Schwenken des Schaltwipphebels im Bereich einer niedrigen Luftfederhubstellung in die Betätigungsrichtung des Belüftungsventils dient. Während einer solchen Betätigung des Belüftungsventils bleibt das Entlüftungsventil unbetätigt.

Zu einer Betätigung des Entlüftungsventils kommt es, wenn der Schaltwipphebel in den Bereich eines unteren Bahnabschnittes gelangt, welcher erreicht wird, wenn sich die Luftfederanordnung in einer oberen Luftfederhubstellung befindet. In dieser anderen Schaltstellung bleibt das Belüftungsventil unbetätigt.

Zwischen dem unteren und dem oberen Bahnabschnitt der mindestens einen Führungsbahn ist ein diese verbindender querverlaufender mittlerer Bahnabschnitt vorgesehen, welcher den Schaltwipphebel bei mittlerer Luftfederhubstellung in einer Neutralstellung hält. In dieser Neutralstellung wird weder das Belüftungsventil noch das Entlüftungsventil betätigt, da kein Bedarf besteht, die Federdruckkammer mit Druckluft aufzupumpen oder zu entlüften.

### Kurzbeschreibung der Zeichnung

Weitere die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht einer Luftfederanordnung mit integrierter Steuerventilanordnung in einer mittleren Luftfederhubstellung,
- Figur 2: eine schematische Darstellung der Steuerventilanordnung aus Figur 1,
- Figur 3: eine perspektivische Ansicht eines hülsenförmigen Betätigungselements mit gabelförmigem Schaltwipphebel,
- Figur 4: eine Seitenansicht einer Luftfederanordnung mit integrierter Steuerventilanordnung in einer oberen Luftfederhubstellung,
- Figur 5: eine Seitenansicht einer Luftfederanordnung mit integrierter Steuerventilanordnung in einer unteren Luftfederhubstellung.

### Detailbeschreibung eines Ausführungsbeispiels

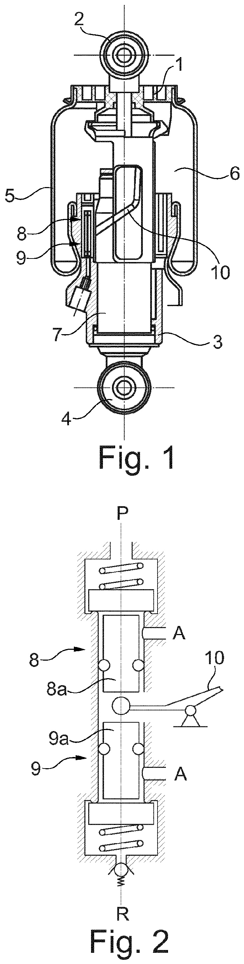

Gemäß Figur 1 besteht die Luftfederanordnung im Wesentlichen aus einem Außenrohr 1 mit oberer Befestigungsöse 2 zur Anbringung an ein Fahrerhaus eines nicht weiter dargestellten Nutzfahrzeuges sowie einem Abrollrohr 3 mit unterer Befestigungsöse 4 zur Anbringung in der Luftfederanordnung an einem Fahrgestell des Nutzfahrzeuges. Das Außenrohr 1 ist mit dem Abrollrohr 3 durch einen Luftfederbalg 5 verbunden, so dass sich zwischen dem Außenrohr 1, dem Abrollrohr 3 und dem Luftfederbalg 5 eine Federdruckkammer 6 bildet. Die Luftfeder wirkt mit einem integriertem hydraulischen Stoßdämpfer 7 zusammen, welcher zum Abdämpfen der gefederten Masse dient.

Die Federdruckkammer 6 der Luftfederanordnung lässt sich über eine integrierte Steuerventilanordnung, bestehend aus einem einzelnen Belüftungsventil 8 und einem einzelnen Entlüftungsventil 9, je nach Belastung mit Druckluft beaufschlagen. Das Belüftungsventil 8 und das Entlüftungsventil 9 sind durch ebenfalls integrierte mechanische Betätigungsmittel, umfassend einen nach Maßgabe der Luftfederhubstellung betätigten Schaltwipphebels 10 ansteuerbar.

Gemäß Figur 2 greift der Schaltwipphebel 10 seitens der Steuerventilanordnung mit dem einen Ende an den einander gegenüberliegenden und stirnseitig einander zugewandten Betätigungsstößel 8a des Belüftungsventils 8 sowie Betätigungsstößel 9a des Entlüftungsventils 9 an. Der Betätigungsstößel 8a des Belüftungsventils 8 ist koaxial zum Betätigungsstößel 9a des Entlüftungsventils 9 angeordnet. Das Belüftungsventil 8 und das Entlüftungsventil 9 sind als federrückgestellte monostabile 2/2-Wege-Schieberventile ausgebildet. Während das Belüftungsventil 8 einen Speisedruckanschluss P mit einem Arbeitsleitungsanschluss A zur Beaufschlagung - der nicht weiter dargestellten - Federdruckkammer verbindet, kann die Federdruckkammer mit dem Entlüftungsventil 9 entlüftet werden, indem der Arbeitsleitungsanschluss A mit einem Entlüftungsanschluss R verbunden wird. Das Belüftungsventil 8 und das Entlüftungsventil 9 sind über den Schaltwipphebel 10 wechselseitig betätigbar. Die Ansteuerung erfolgt derart, dass von den Bahnabschnitten (12a; 12b) das Belüftungsventil (8) und das Entlüftungsventil (9) zwar abhängig von der Hubbewegung der Federanordnung, aber nicht linear proportional damit geöffnet oder geschlossen werden.

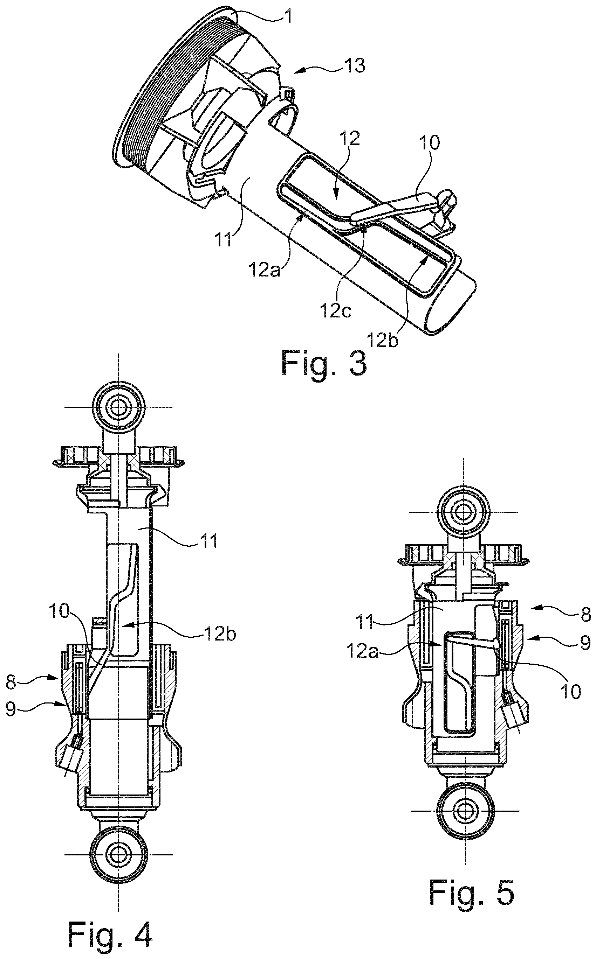

Gemäß Figur 3 wirkt der Schaltwipphebel 10 mit einem hülsenförmigen Betätigungselement 11 zusammen. Hierzu greift das der Steuerventilanordnung abgewandte Ende des Schaltwipphebels 10 in Führungsbahnen 12 ein, welche sich längs des gesamten Luftfederhubwegs der Luftfederanordnung erstrecken. Die beiden am hülsenförmigen Betätigungselement 11 einander gegenüberliegenden Führungsbahnen 12 (wovon hier lediglich eine Führungsbahn erkennbar ist) wirken mit einem gabelförmigen Ende des Schaltwipphebels 10 formschlüssig zusammen. Das Betätigungselement 11 ist seitens eines distalen Endes über eine Kugelgelenkanordnung 13 am Außenrohr 1 der Luftfederanordnung angebracht.

Die Führungsbahn 12 ist aus mehreren funktionalen Abschnitten zusammengesetzt und weist einen oberen Bahnabschnitt 12a zum Schwenken des Schaltwipphebels 10 im Bereich einer niedrigen Luftfederhubstellung, einen unteren Bahnabschnitt 12b zum Schwenken des Schaltwipphebels 10 im Bereich einer oberen Luftfederhubstellung und einen dazwischen liegenden und beide Bahnabschnitte quer verbindend verlaufenden mittleren Bahnabschnitt 12c, welcher den Schaltwipphebel 10 bei mittlerer Luftfederhubstellung in der Neutralstellung hält, so wie in Figur 1 gezeigt.

Dem gegenüber befindet sich gemäß Figur 4 der Schaltwipphebel 10 im Bereich des unteren Bahnabschnitts 12b. Diese Stellung des Schaltwipphebels 10 wird im Bereich der oberen Luftfederhubstellung erreicht, bei welcher das Außenrohr 1 gegenüber dem Abrollrohr 3 ausgefahren ist. Im Bereich dieser oberen Luftfederhubstellung wird das Entlüftungsventil 9 betätigt und das Belüftungsventil 8 bleibt unbetätigt. In Folge dessen findet eine Entlüftung der - hier nicht weiter dargestellten - Federdruckkammer zur Absenkung des Luftfederniveaus statt.

Bei der in Figur 5 dargestellten niedrigen Luftfederhubstellung befindet sich das Außenrohr 1 gegenüber dem Abrollrohr 3 in der eingefahrenen Position. Hierbei gelangt der Schaltwipphebel 10 in den Bereich des oberen Bahnabschnittes 12a, wodurch das Belüftungsventil 8 betätigt wird und das Entlüftungsventil 9 in der unbetätigten Schaltstellung verbleibt. In Folge dessen findet eine Belüftung der - hier ebenfalls nicht weiter dargestellten - Federdruckkammer zur Anhebung des Luftfederniveaus statt.

### Bezugszeichenliste

- 1: Außenrohr
- 2: Befestigungsöse
- 3: Abrollrohr
- 4: Befestigungsöse
- 5: Luftfederbalg
- 6: Federdruckkammer
- 7: Stoßdämpfer
- 8: Belüftungsventil
- 9: Entlüftungsventil
- 10: Schaltwipphebel
- 11: Befestigungselement
- 12: Führungsbahn (-abschnitt)
- 13: Kugelgelenkanordnung

- A: Arbeitsleitungsanschluss
- P: Speisedruckanschluss
- R: Entlüftungsanschluss

## Patentansprüche

1. Luftfederanordnung mit einer integrierten Steuerventilanordnung zur Druckluftbeaufschlagung einer zwischen einem Außenrohr (1), einem Abrollrohr (3) und einem diese Bauteile verbindenden Luftfederbalg (5) gebildeten Federdruckkammer (6), wobei die Steuerventilanordnung aus einem einzelnen Belüftungsventil (8) und einem einzelnen Entlüftungsventil (9) besteht, die durch ebenfalls integrierte mechanische Betätigungsmittel nach Maßgabe der Luftfederhubstellung zum Be- oder Entlüften der Federdruckkammer (6) betätigbar sind,
**dadurch gekennzeichnet, dass** das Belüftungsventil (8) gegenüberliegend dem Entlüftungsventil (9) mit einander zugewandten Betätigungsstößeln (8a; 9a) seitens des Außenrohres (1) oder des Abrollrohres (3) angeordnet ist, wobei die dazwischenliegend hierauf einwirkenden mechanischen Betätigungsmittel einen Schaltwipphebel (10) umfassen, der mit dem einen Ende mit mindestens einer Führungsbahn (12) eines am Abrollrohr (3) bzw. Außenrohr (1) angebrachten Betätigungselements (11) eingreift, um mit dem anderen Ende auf die Betätigungsstößel (8a, 8b) zum Schalten der Steuerventilanordnung einzuwirken.

2. Luftfederanordnung nach Anspruch 1,
**dadurch gekennzeichnet, dass** sich die Führungsbahn (12) des Betätigungselements (11) über den gesamten Luftfederhubweg erstreckt.

3. Luftfederanordnung nach Anspruch 1,
**dadurch gekennzeichnet, dass** die Betätigungsstößel (8a; 9a) von Belüftungsventil (8) und Entlüftungsventil (9) koaxial zueinander angeordnet sind.

4. Luftfederanordnung nach Anspruch 1,
**dadurch gekennzeichnet, dass** das Belüftungsventil (8) und das Entlüftungsventil (9) als federrückgestellte monostabile 2/2-Wege-Ventil in Schieber- oder Sitzventilbauweise ausgebildet sind.

5. Luftfederanordnung nach Anspruch 1,
**dadurch gekennzeichnet, dass** sich die geöffneten Strömungsquerschnitte des Belüftungsventils (8) und/oder des Entlüftungsventils (9) abhängig von der linearen Bewegung der schieberartigen Betätigungsstößels (8a; 9a) ändern.

6. Luftfederanordnung nach Anspruch 1,
**dadurch gekennzeichnet, dass** das Betätigungselement (11) seitens eines distalen Endes über eine zu der Längsachse der Luftfederanordnung koaxialen Kugelgelenkanordnung (13) am Außenrohr (1) angebracht ist.

7. Luftfederanordnung nach Anspruch 1,
**dadurch gekennzeichnet, dass** das Betätigungselement (11) in dem Abrollrohr (3) gegen Verdrehung um die Längsachse der Luftfederungsanordnung gesichert geführt ist.

8. Luftfederanordnung nach Anspruch 1,
**dadurch gekennzeichnet, dass** das Betätigungselement (11) hülsenförmig ausgebildet ist und zwei einander an der Mantelfläche gegenüberliegend angeordnete Führungsbahnen (12) aufweist.

9. Luftfederanordnung nach Anspruch 6,
**dadurch gekennzeichnet, dass** die beiden einander gegenüberliegenden Führungsbahnen (12) des Betätigungselements (11) mit einem gabelförmigen Ende des Schaltwipphebel (10) formschlüssig zusammenwirken.

10. Luftfederanordnung nach Anspruch 1,
**dadurch gekennzeichnet, dass** die mindestens einer Führungsbahn (12) einen dem Belüftungsventil (8) zugeordneten oberen Bahnabschnitt (12a) zum Schwenken des Schaltwipphebels (10) im Bereich einer niedrigen Luftfederhubstellung in die Betätigungsrichtung des Belüftungsventils (8) umfasst, wobei das Entlüftungsventils (9) unbetätigt bleibt.

11. Luftfederanordnung nach Anspruch 1,
**dadurch gekennzeichnet, dass** die mindestens einer Führungsbahn (12) einen dem Entlüftungsventil (9) zugeordneten unteren Bahnabschnitt (12b) zum Schwenken des Schaltwipphebels (10) im Bereich einer oberen Luftfederhubstellung in die Betätigungsrichtung des Entlüftungsventils (9) umfasst, wobei das Belüftungsventils (8) unbetätigt bleibt.

12. Luftfederanordnung nach Anspruch 10 und 11,
**dadurch gekennzeichnet, dass** von den Bahnabschnitten (12a; 12b) das Belüftungsventil (8) und/oder das Entlüftungsventil (9) zwar abhängig von der Hubbewegung der Federanordnung, aber nicht linear proportional damit geöffnet oder geschlossen werden.

13. Luftfederanordnung nach Anspruch 8 und 9,
**dadurch gekennzeichnet, dass** zwischen dem unteren und dem oberen Bahnabschnitt (12b; 12a) ein diese verbindender mittlerer Bahnabschnitt (12c) vorgesehen ist, welcher den Schaltwipphebel (10) bei mittlerer Luftfederhubstellung in einer Neutralstellung hält, um weder das Belüftungsventil (8) noch das Entlüftungsventil (9) zu betätigen.

## Claims

1. Air spring arrangement having an integrated control valve assembly for the admission of compressed air into a spring pressure chamber (6) formed between an outer tube (1), a rolling tube (3) and an air spring bellows (5) which connects said components, wherein the control valve assembly consists of an individual aeration valve (8) and an individual deaeration valve (9), which are actuable by likewise integrated, mechanical actuating means in accordance with the air spring stroke position in order to aerate or deaerate the spring pressure chamber (6),
**characterised in that** the aeration valve (8) is arranged opposite the deaeration valve (9), with actuating tappets (8a; 9a) on the part of the outer tube (1) or of the rolling tube (3) facing each other, wherein the mechanical actuating means which act on the actuating tappets while lying there-between comprise a switching rocker arm (10), which engages at the one end with at least one guide track (12) of an actuating element (11) attached to the rolling tube (3) or outer tube (1), in order to then act at the other end on the actuating tappets (8a, 8b) in order to switch the control valve assembly.

2. Air spring arrangement according to claim 1,
**characterised in that** the guide track (12) of the actuating element (11) extends over the entire air spring stroke travel.

3. Air spring arrangement according to claim 1,
**characterised in that** the actuating tappets (8a; 9a) of the aeration valve (8) and the deaeration valve (9) are arranged coaxially with respect to each other.

4. Air spring arrangement according to claim 1,
**characterised in that** the aeration valve (8) and the deaeration valve (9) are designed as spring-reset monostable 2/2 directional control valves of slide valve or seat valve construction.

5. Air spring arrangement according to claim 1,
**characterised in that** the open flow cross-sections of the aeration valve (8) and / or of the deaeration valve (9) change depending on the linear movement of the slide-like actuating tappets (8a; 9a).

6. Air spring arrangement according to claim 1,
**characterised in that** the actuating element (11) is attached on the part of a distal end to the outer tube (1) via a ball and socket arrangement (13) which is coaxial with respect to the longitudinal axis of the air spring arrangement.

7. Air spring arrangement according to claim 1,
**characterised in that** the actuating element (11) is guided in the rolling tube (3) in a manner secured against rotation about the longitudinal axis of the air spring arrangement.

8. Air spring arrangement according to claim 1,
**characterised in that** the actuating element (11) is of sleeve shaped design and has two guide tracks (12) arranged lying opposite each other on the casing surface.

9. Air spring arrangement according to claim 6,
**characterised in that** the two opposite-lying guide tracks (12) of the actuating element (11) interact with a fork-shaped end of the switching rocker arm (10) with a form fit.

10. Air spring arrangement according to claim 1,
**characterised in that** the at least one guide track (12) comprises an upper track portion (12a), which is assigned to the aeration valve (8), for pivoting the switching rocker arm (10) in the actuating direction of the aeration valve (8) in the region of a low air spring stroke position, wherein the deaeration valve (9) remains unactuated.

11. Air spring arrangement according to claim 1,
**characterised in that** the at least one guide track (12) comprises a lower track portion (12b), which is assigned to the deaeration valve (9), for pivoting the switching rocker arm (10) in the actuating direction of the deaeration valve (9) in the region of an upper air spring stroke position, wherein the aeration valve (8) remains unactuated.

12. Air spring arrangement according to claims 10 and 11,
**characterised in that** the aeration valve (8) and / or the deaeration valve (9) is / are opened or closed by the track portions (12a; 12b) depending on the stroke movement of the spring arrangement, but not linearly proportionally with respect thereto.

13. Air spring arrangement according to claims 8 and 9,
**characterised in that** a middle track portion (12c) is provided between the lower and the upper track portion (12b; 12a), said middle track portion connecting said lower and upper track portions and keeping the switching rocker arm (10) in a neutral position in the middle air spring stroke position in order to actuate neither the aeration valve (8) nor the deaeration valve (9).

## Revendications

1. Agencement de suspension pneumatique, comprenant un agencement intégré de soupape de commande pour l'alimentation en air comprimé d'une chambre (6) de pression de suspension formée entre un tuyau (1) extérieur, un tuyau (3) de déroulement et un coussin (5) d'air reliant ces pièces, l'agencement de soupape de commande étant constitué d'une soupape (8) individuelle d'alimentation en air et d'une soupape (9) individuelle de purge d'air, qui peuvent être actionnées par des moyens d'actionnement mécaniques également intégrés en fonction de la position de course de la suspension pneumatique pour alimenter en air la chambre (6) de pression de suspension ou l'en purger,
**caractérisé en ce que** la soupape (8) d'alimentation en air est disposée en opposition à la soupape (9) de purge d'air avec des poussoirs (8a; 9a) d'actionnement tournés l'un vers l'autre du côté du tuyau (1) extérieur ou du tuyau (3) de déroulement, les moyens d'actionnement mécaniques, agissant intermédiairement, comprenant un levier (10) de bascule de commutation, qui attaque par l'une des extrémités au moins une voie (12) de guidage d'un élément (11) d'actionnement mis sur le tuyau (3) de déroulement ou le tuyau (1) extérieur et qui agit par l'autre extrémité sur les poussoirs (8a, 8b) d'actionnement pour la commutation de l'agencement de la soupape de commande.

2. Agencement de suspension pneumatique suivant la revendication 1,
**caractérisé en ce que** la voie (12) de guidage de l'élément (11) d'actionnement s'étend sur tout le trajet de course de la suspension.

3. Agencement de suspension pneumatique suivant la revendication 1,
**caractérisé en ce que** les poussoirs (8a; 9a) d'actionnement de la soupape (8) d'alimentation en air et de la soupape (9) de purge d'air sont disposés coaxialement l'un à l'autre.

4. Agencement de suspension pneumatique suivant la revendication 1,
**caractérisé en ce que** la soupape (8) d'alimentation en air et la soupape (9) de purge d'air sont constituées en mode de construction à tiroir ou à soupape à siège sous la forme d'une soupape 2/2 voies monostables rappelée par ressort.

5. Agencement de suspension pneumatique suivant la revendication 1,
**caractérisé en ce que** les sections transversales d'écoulement ouvertes de la soupape (8) d'alimentation en air et/ou de la soupape (9) de purge d'air se modifient en fonction du déplacement linéaire du poussoir (8a; 9a) d'actionnement de type à tiroir.

6. Agencement de suspension pneumatique suivant la revendication 1,
**caractérisé en ce que** l'élément (11) d'actionnement est mis du côté d'une extrémité distale sur le tuyau (1) extérieur par un agencement (13) d'articulation à bille coaxial à l'axe longitudinal de la suspension pneumatique.

7. Agencement de suspension pneumatique suivant la revendication 1,
**caractérisé en ce que** l'élément (11) d'actionnement est guidé dans le tuyau (3) de déroulement en étant protégé de la torsion autour de l'axe longitudinal de l'agencement de suspension hydraulique.

8. Agencement de suspension pneumatique suivant la revendication 1,
**caractérisé en ce que** l'élément (11) d'actionnement est constitué sous la forme d'un manchon et a deux voies (12) de guidage disposées en opposition l'une à l'autre sur la surface latérale.

9. Agencement de suspension pneumatique suivant la revendication 6,
**caractérisé en ce que** les deux voies (12) de guidage opposées l'une à l'autre de l'élément (11) d'actionnement coopèrent à complémentarité de forme avec une extrémité en forme de fourche du levier (10) de la bascule de commutation.

10. Agencement de suspension pneumatique suivant la revendication 1,
**caractérisé en ce que** la au moins une voie (12) de guidage comprend un tronçon (12a) de voie supérieur associée à la soupape (8) d'alimentation en air pour faire pivoter le levier (10) de la bascule de commutation dans le domaine d'une position de course basse de la suspension hydraulique dans le sens d'actionnement de la soupape (8) d'alimentation en air, la soupape (9) de purge d'air restant non actionnée.

11. Agencement de suspension pneumatique suivant la revendication 1,
**caractérisé en ce que** la au moins une voie (12) de guidage comprend un tronçon (12b) de voie inférieur associé à la soupape (9) de purge d'air pour faire pivoter le levier (10) de la bascule de commutation dans le domaine d'une position de course de la suspension pneumatique supérieur dans le sens d'actionnement de la soupape (9) de purge d'air, la soupape (8) d'alimentation en air restant non actionnée.

12. Agencement de suspension pneumatique suivant la revendication 10 et 11,
**caractérisé en ce que**, par les tronçons (12a; 12b) de voie, la soupape (8) d'alimentation en air et/ou la soupape (9) de purge d'air sont ouvertes ou fermées, certes en fonction du déplacement de course de la suspension, mais non en y étant proportionnel linéairement.

13. Agencement de suspension pneumatique suivant la revendication 8 et 9,
**caractérisé en ce que**, entre le tronçon (12b) de voie inférieur et le tronçon (12a) de voie supérieur, est prévu un tronçon (12c) de voie médian les reliant, qui maintient le levier (10) de la bascule de commutation pour une position de course de la suspension pneumatique médiane dans une position neutre pour n'actionner ni la soupape (8) d'alimentation en air, ni la soupape (9) de purge d'air.
